(19)

Europäisches
Patentamt
European
Patent Office
Office européen
des brevets

(11) **EP 2 071 895 B1**

(12) **EUROPEAN PATENT SPECIFICATION**

(45) Date of publication and mention
of the grant of the patent:
**05.01.2011 Bulletin 2011/01**

(51) Int Cl.:
*H04W 72/08* *(2009.01)* *H04W 16/08* *(2009.01)*
*H04W 36/22* *(2009.01)*

(21) Application number: **08163925.4**

(22) Date of filing: **09.09.2008**

(54) **Method and mobile communication system for managing radio resources by using SIR (signal-to-interference ratio) balancing**

Verfahren und Mobilkommunikationssystem zur Verwaltung von Funkressourcen mittels Abgleichen des Signal-Interferenz-Verhältnisses (SIR balancing)

Procédé et système de communication mobile pour la gestion de ressources radio par l'équilibrage de la relation signal-interférence (SIR balancing)

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.12.2007 KR 20070130343**

(43) Date of publication of application:
**17.06.2009 Bulletin 2009/25**

(73) Proprietors:
• **Electronics and Telecommunications Research Institute**
**Yuseong-gu**
**Daejon 305-350 (KR)**
• **KTFreetel Co., Ltd.**
**Songpa-gu**
**Seoul (KR)**

(72) Inventors:
• **Kim, Hyung Sub**
**305-350, Daejeon (KR)**
• **Park, Soon Gi**
**305-350, Daejeon (KR)**
• **Nam, Sang Woo**
**305-350, Daejeon (KR)**
• **Shin, Yeon Seung**
**305-350, Daejeon (KR)**
• **Kim, Yeong Jin**
**305-350, Deajeon (KR)**

(74) Representative: **Betten & Resch**
**Patentanwälte**
**Theatinerstrasse 8**
**80333 München (DE)**

(56) References cited:
**EP-A- 1 740 000      WO-A-2007/123980**
**GB-A- 2 311 191      US-A1- 2003 161 268**

**Description**

BACKGROUND OF THE INVENTION

1. Field of the invention

The present invention relates to a method for managing radio resource in mobile communication system and system thereof and, more particularly, a method for managing radio resource in mobile communication system, in which radio resources are managed by using SIR balancing and cell breathing methods, and system thereof.

The present invention was supported by the IT R&D program of Ministry of Information and Communication (MIC) and Institute for Information Technology Advancement (IITA) [Project No.: 2005-S-404-23, Project Title: Development of 3G Evolution Access System].

2. Description of the Related Art

Real-time service such as voice communication or streaming service etc. in mobile communication should guarantee a fixed level of quality of service (QoS) whenever such service is provided. If the fixed level of QoS does not exceed at one point a threshold that the system defines, it cannot be said that such service has been provided.

The fixed level of QoS can be expressed as signal to-interface ratio (SIR). If a specified user terminal raises its transmission power, its service quality can be increased but such power affects other user terminals with large interference such that the performance of entire mobile communication system may be deteriorated. Accordingly, since the transmission power of every user terminal needs to consider comprehensively, SIR balancing controls transmission power of user terminals and maintains at the same level with SIR of which balancing should be kept at a minimum level. Power waste can be prevented by such a method and the same level of service can be provided to more user terminals.

Then, since the solution of SIR balancing may not be in existence because of the environment of mobile communication network etc., SIR balancing cannot be always performed at any time. Accordingly, it is required to prevent such circumstances as much as possible and also perform SIR balancing such that the utilization efficiency of radio resources to real-time service in the mobile communication system is increased and more users receive such a service with the same resources.

US 2003/0161268 A1 discloses a method for connection set-up in a communication network which comprises the steps of determining, for a requested connection, a set of connection parameters including path, channel and at least one physical link parameter by means of integrated optimization of a single objective function with respect to all of the connection parameters, and establishing the requested connection based on the determined set of connection parameter.

EP 1 740 000 A1 discloses a method for making handover of a radio transmission in a radio communication system. The method comprises identifying an approximation of a mobile station at a border area based on measurements so as to accomplish a transmitting power enhancement on a transmitting power on a part of a base station when the mobile station reaches the border area in a point of time, and to accomplish a transmitting power enhancement on another transmitting power on a part of a base station in another point of time so that an handover of the radio transmission to the base station takes place.

SUMMARY OF THE INVENTION

Accordingly, an object of the present invention is to provide a method for managing radio resource in mobile communication system and system thereof so as to provide real-time service to more users with the same resources by increasing utilization efficiency of radio resources to real-time service in mobile communication system.

The present invention is defined in the independent claims. The dependent claims form advantageous embodiments thereof.

A method for managing radio resource in mobile communication system comprises the steps of performing first SIR balancing to a first cell in case that a service request is made from a terminal located in the first cell, and controlling size of both the first cell and a second cell by performing cell breathing to the second cell adjacent to the first cell in case that the first SIR balancing does not succeed, and approving the service request of the terminal in case that the second SIR balancing is performed to succeed according to the size controlled first cell and second cell.

The mobile communication system comprises a terminal located in a first cell and a base station controller, wherein the base station controller performs a second SIR balancing according to a size controlled first cell and a size controlled second cell by performing cell breathing to the second cell adjacent to the first cell in case that a first SIR balancing does not succeed upon a service request from the terminal and approves the service request of the terminal when the second SIR balancing succeeds.

To achieve the above objects, the present invention provides a computer-readable recording medium to record a program so as to execute the methods.

BRIEF DESCRIPTION OF THE DRAWINGS

FIGS. 1 to 3 illustrate SIR balancing and cell breathing,
FIGS. 4 to 5 illustrate cell breathing zone and handover related to the cell breathing zone, and
FIG. 6 illustrates a flowchart to explain a method for managing radio resource in mobile communication system according to an embodiment of the present invention.

DETAILED DESCRIPTION OF THE PREFERRED EMBODIMENTS

Hereinafter, exemplary embodiments of the present invention will be described in detail with reference to the attached drawings.

A method for managing radio resource according to the present invention uses cohesively two methods of SIR balancing and cell breathing among methods for managing radio resources in mobile communication system, SIR balancing is, simply speaking, a technology to maximize SIR that should be minimally guaranteed to all user terminals within a specified cell. The maximization of SIR does not mean that the condition of link to each user terminal is decided to assign an independent value but that the maximum SIR of the same level is assigned after considering the mixed interaction of all user terminals. Additionally, the cell breathing is a technology to control interactively cell radius according to the density of users. The failure of SIR balancing can be interpreted to generate too much large interference because of many users of the corresponding cell. The cell breathing controls each radius of two adjacent cells around the specified point between two cells to increase the success probability of SIR balancing within entire cells and thus makes it possible to provide real-time service to many users.

Prior to the explanation of the method for managing radio resource according to the present invention, SIR balancing will be first explained. Signal-to-interface ratio (SIR) in mobile communication system is as following:

【Equation 1】

$$SIR_k = \frac{g_{B(k)k} p_k}{\sum_{j=1, j \neq k}^{M} \theta \cdot g_{B(k)j} p_j + N}$$

where, k is an user index and B(k) means a base station connected to user k. N is a thermal noise. g is a scale to indicate how much the sending power of 1 is received at the receiving part, and this is decided by a shadow fading, which is generated by the shadow phenomena of distance and building. θ indicates the effect of interference on channels and shows a value between 0 and 1 according to what kind of multi access technologies are used for a mobile communication system.

Assuming a minimum SIR to be reached through SIR balancing as $\gamma$, if total M users exist within cell 1, the following equation can be drawn.

【Equation 2】

$$g_{11}p_1 - \gamma \cdot g_{12}p_2 - \gamma \cdot g_{13}p_3 - \gamma \cdot g_{14}p_4 - \cdots - \gamma \cdot g_{1M}p_M = \gamma \cdot N$$

$$- \gamma \cdot g_{11}p_1 + g_{12}p_2 - \gamma \cdot g_{13}p_3 - \gamma \cdot g_{14}p_4 - \cdots - \gamma \cdot g_{1M}p_M = \gamma \cdot N$$

$$- \gamma \cdot g_{11}p_1 - \gamma \cdot g_{12}p_2 + g_{13}p_3 - \gamma \cdot g_{14}p_4 - \cdots - \gamma \cdot g_{1M}p_M = \gamma \cdot N$$

$$- \gamma \cdot g_{11}p_1 - \gamma \cdot g_{12}p_2 - \gamma \cdot g_{13} + p_3 g_{14}p_4 - \cdots - \gamma \cdot g_{1M}p_M = \gamma \cdot N$$

$$\vdots$$

$$- \gamma \cdot g_{11}p_1 - \gamma \cdot g_{12}p_2 - \gamma \cdot g_{13} - \gamma \cdot p_3 g_{14}p_4 - \cdots + g_{1M}p_M = \gamma \cdot N$$

In the equation 2, a simple simultaneous equation of M variables consisting of M variables and M equations should have solutions. However, since value p to show the power of each user terminal is limited to a value between 0 and the maximum output of such a terminal, the solution of the equation 2, as the case may be, may not be in existence. Once again, it means that the SIR balancing fails and thus the service request of the terminal is not approved. That is, it is judged that the method for managing radio resource according to the present invention is basically applied to real-time service but the service is not provided to a user terminal of which the minimum SIR is not guaranteed through SIR balancing. Provision of real-time service such as voice communication and streaming service means the guarantee of the minimum level of SIR through SIR balancing.

A user terminal in which a solution to SIR balancing is not in existence requires more than the maximum power. That is, in case that the link status of the user terminal is very bad, it means that larger transmission power is required to overcome the interference due to other user terminals using the same channels and reach the desired level of SIR. It happens when the user terminal is located outside of cell and its link status is not good or the interference among user terminals is large because of many user terminals.

For preventing probabilistically such a case at full stretch, a method for managing radio resources according to the present invention uses also a cell breathing method. The cell breathing method means that cell radius is not fixedly maintained but varied according to the density of traffic. Generally, it is the technology to make traffic density per cell maintained at a similar level by decreasing cell radius in a high traffic density area and increasing in opposite case. However, it is used in the present invention to control cell radius every time in order to successfully perform SIR balancing.

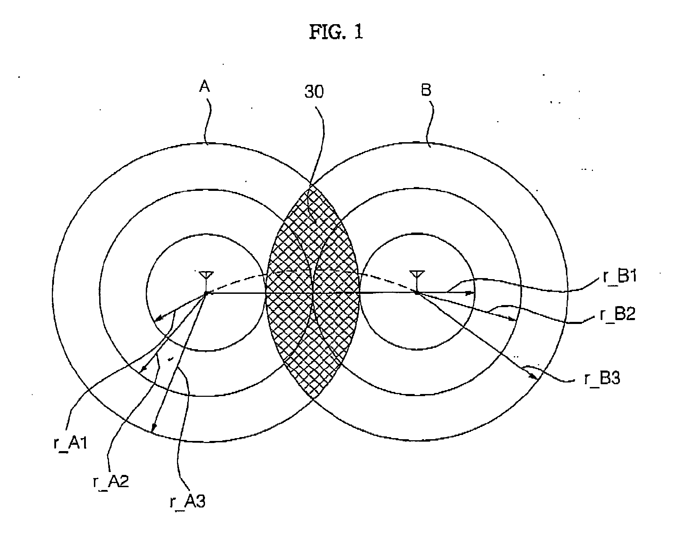

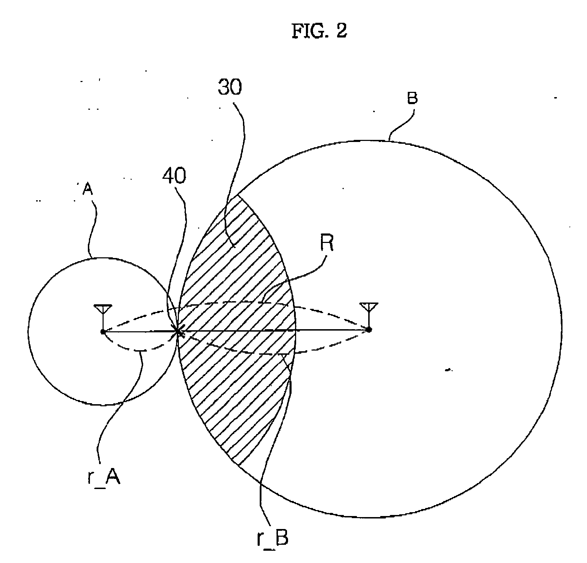

FIG. 1 and FIG. 2 illustrate SIR balancing and cell breathing. FIG. 1 shows two adjacent cells A, B. Cell A (A) is assumed to provide M users with real-time service and cell B (B) is assumed to provide L users with real-time service. Here, it means that the reception of service is the successful performance of SIR balancing as mentioned above.

As in FIG. 1, a point within a handover zone 30 is considered as a reference point for cell breathing. The size of Cell A (A) can be varied from a minimum radius r_A1 to a maximum radius r_A3. In the same way, the size of Cell B (B) can be varied from a minimum radius r_B1 to a maximum radius r_B3. However, as described in FIG.2, the finally decided cell radii r_A and r_B should satisfy the equation of r_A + r_B = R in order to prevent the handover zone 30 between two cells A and B from excluding from all coverage of two cells A and B.

A point indicated as X 40 in FIG. 2 is located in the handover zone 30 between two cell A and B and is a reference point on a lineal distance between two base stations. The location named as cell breathing point is a point to determine how far the maximum radius of each cell is. If the location of X 40 is determined, each cell is again set up as a cell having a radius of X 40 from the corresponding base station.

Before a method to draw the location of accurate X 40 is mentioned, the difference between a theoretical approach provided in the present invention and actual mobile communication network environment needs to be mentioned first. As described above, a value g to indicate a ratio of receiving power to sending power is determined by a distance and shadow fading etc. A location of X 40 on a lineal distance between two base stations is drawn from the equation to be given later.

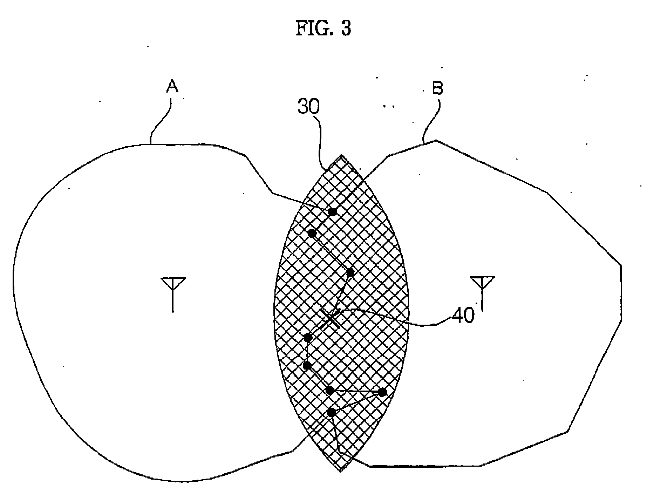

Theoretical radius of circular cell can be provided from the distance drawn like above. However, because buildings are irregularly dispersed in actual situation, the cell radius does not have a specified geometrical shape. It means that the provision of circular cell on the basis of a distance X from each cell is unreasonable. Even though the value g is theoretically expressed as a function of distance in the present invention, database for cell breathing in actual condition should be constructed by defining reference points as many as possible within the handover zone and calculating the value g of each cell to the zone. After determining the location of X, a receiving power g*p to each cell is calculated and compared with the receiving power of each reference point which is already secured through prior investigation such that cell radius is set up through the most approximating value or, in case of no most approximating value, through a linear compensation between reference points as shown in FIG. 3.

A method to determine the location of X 40 is as follows. It is assumed that cell A and cell B provide real-time service for M users and L users, respectively. Here, the provision of service means the successful performance of SIR balancing. Assume that multiple terminal users make a service request under this circumstance. In case that a plurality of user terminals which are evenly distributed in cell A and cell B make a service request, the above-described equation is developed as a new equation including newly entered user terminal and at this time the service request is rejected to user terminals in which solution cannot be existed.

The reason cell breathing is used is the following. That is, load to the pre-existing user terminals in each cell is different each other. It is largely affected by the number or entire link status of user terminals. For example, assume that cell A has an almost full state of system capacity and cell B has a little margin. If cell is determined only by cell radius or the intensity of receiving signal of pilot channel and SIR balancing is performed for service approval, it is impossible to approve service request in cell A without available system capacity when there is no user terminal to connect cell A existing within the handover zone in consideration of physical parameter base.

However, if radius of each cell is controlled, the probability to connect the user terminal to cell B is increased to have an advantage capable of increasing the utilization of system resource. Since cell B has relatively less load than cell A (total interference is less than A), power value of new user terminal for satisfying the above-described equation is lower than that of cell A. That is, in order that the transmission power of user terminal of cell A in a specified location becomes larger than in cell B, the location is closer to cell A and the radius of cell B is increased larger than that of cell A. It does not mean that all service requests of new user terminals after controlling cell radius through cell breathing succeed but means that the capability can be probabilistically largely increased. A method for assuming actually location of X is the following.

Assuming that new user located in X makes a service request when M users are receiving such a service in cell A, the following equation is established:

【Equation 3】

$$g_{A1}P_1 - \gamma_A \cdot g_{A2}P_2 - \gamma_A \cdot g_{A3}P_3 - \gamma_A \cdot g_{A4}P_4 - \cdots - \gamma_A \cdot g_{AM}P_M - \gamma_A \cdot g_{AM+1}P_{M+1} = \gamma_A \cdot N_A$$
$$-\gamma_A \cdot g_{A1}P_1 + g_{A2}P_2 - \gamma_A \cdot g_{A3}P_3 - \gamma_A \cdot g_{A4}P_4 - \cdots - \gamma_A \cdot g_{AM}P_M - \gamma_A \cdot g_{AM+1}P_{M+1} = \gamma_A \cdot N_A$$
$$-\gamma_A \cdot g_{A1}P_1 - \gamma_A \cdot g_{A2}P_2 + g_{A3}P_3 - \gamma_A \cdot g_{A4}P_4 - \cdots - \gamma_A \cdot g_{AM}P_M - \gamma_A \cdot g_{AM+1}P_{M+1} = \gamma_A \cdot N_A$$
$$-\gamma_A \cdot g_{A1}P_1 - \gamma_A \cdot g_{A2}P_2 - \gamma_A \cdot g_{A3}P_3 + g_{A4}P_4 - \cdots - \gamma_A \cdot g_{AM}P_M - \gamma_A \cdot g_{AM+1}P_{M+1} = \gamma_A \cdot N_A$$
$$\vdots$$
$$-\gamma_A \cdot g_{A1}P_1 - \gamma_A \cdot g_{A2}P_2 - \gamma_A \cdot g_{A3}P_3 - \gamma_A \cdot g_{A4}P_4 - \cdots - \gamma_A \cdot g_{AM}P_M + g_{AM+1}P_{M+1} = \gamma_A \cdot N_A$$

Furthermore, assuming that new user located in X makes a service request when N users are receiving such a service in cell B, the following equation is established.

【Equation 4】

$$g_{B1}P_1 - \gamma_B \cdot g_{B2}P_2 - \gamma_B \cdot g_{B3}P_3 - \gamma_B \cdot g_{B4}P_4 - \cdots - \gamma_B \cdot g_{BL}P_L - \gamma_B \cdot g_{BL+1}P_{L+1} = \gamma_B \cdot N_B$$
$$-\gamma_B \cdot g_{B1}P_1 + g_{B2}P_2 - \gamma_B \cdot g_{B3}P_3 - \gamma_B \cdot g_{B4}P_4 - \cdots - \gamma_B \cdot g_{BL}P_L - \gamma_B \cdot g_{BL+1}P_{L+1} = \gamma_B \cdot N_B$$
$$-\gamma_B \cdot g_{B1}P_1 - \gamma_B \cdot g_{B2}P_2 + g_{B3}P_3 - \gamma_B \cdot g_{B4}P_4 - \cdots - \gamma_B \cdot g_{BL}P_L - \gamma_B \cdot g_{BL+1}P_{L+1} = \gamma_B \cdot N_B$$
$$-\gamma_B \cdot g_{B1}P_1 - \gamma_B \cdot g_{B2}P_2 - \gamma_B \cdot g_{B3}P_3 + g_{B4}P_4 - \cdots - \gamma_B \cdot g_{BL}P_L - \gamma_B \cdot g_{BL+1}P_{L+1} = \gamma_B \cdot N_B$$
$$\vdots$$
$$-\gamma_B \cdot g_{B1}P_1 - \gamma_B \cdot g_{B2}P_2 - \gamma_B \cdot g_{B3}P_3 - \gamma_B \cdot g_{B4}P_4 - \cdots - \gamma_B \cdot g_{BL}P_L + g_{BL+1}P_{L+1} = \gamma_B \cdot N_B$$

Assume that noise N of each cell and interference between cells are included. Equation 3 and equation 4 are respectively simultaneous equations of the transmission power P of each user and the transmission power of user located in X with a gain value g. Since there are M+L+2 equations with M+L+2 variables, the simultaneous equations are an answerable problem without difficulty.

However, since it can happen that there is no solution to user which is assumed to locate in X, any gain may not be produced even though cell breathing is performed on the base of certain point, and thus cell breathing is not made to perform. No solution means that value $p_{L+4}$ exceeds an effective range or value $g_{AM+2}$ or $g_{AM+1}$ is not in existence. Value g is expressed as the function of distance and shadow fading and the fading according to the movement of a body. In such a snatshot method as the present invention, it is possible to neglect the fading generated according to the movement, g by distance and shadow fading is generally expressed as $s/d^{\alpha}$, in which s indicates shadow fading and d indicates distance. $\alpha$ has the value of approximately 3.5 to 4. Here, assume that $\alpha$ is 4. Distance is drawn by substituting value $g_{BL+1}$ and $g_{BL+1}$, which are drawn by the equation 3 and equation 4, to the following equation 5.

【Equation 5】

$$g_{AM+1} = \frac{s_A}{D^4}$$

【Equation 6】

$$g_{BL+1} = \frac{s_B}{(R-D)^4}$$

If D satisfying both equation 5 and equation 6 is not drawn, cell breathing is not made to perform.

If value D is calculated, cell radii are respectively adjusted as D and R-D through cell breathing as in FIG. 2. If the information of multiple reference points including the information of shadow fading distribution over handover zone are secured in the operation of actual system, cell breathing like FIG. 3, which is not a theoretical circular cell, is performed.

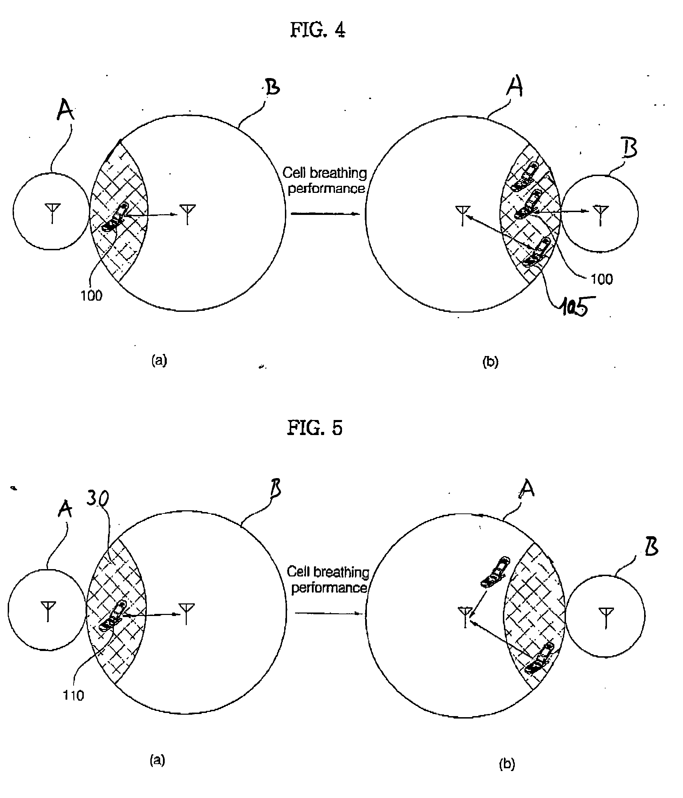

Cell breathing method for successfully performing an approval control through SIR balancing is performed in every time slot. In this case, ping-pong phenomena to handover candidate group may be problematic. That is, even though a user does not make its location changed, cell size is decreased or increased and thus the relative point to each cell is changed every time to cause ping-pong phenomena problem. In order to prevent such a problem, handover is not made to perform, as described above with reference to FIG. 4 and FIG. 5, within handover zone, in which cell breathing is performed.

That is, as in FIG. 4(a), if cell breathing is performed when a first user terminal 100 is connected to cell B and thus cell size is controlled like FIG. 4(b), the first user terminal 100 is continuously connected to cell B in order to prevent ping-pong phenomena. However, a newly-added second user terminal 105 is connected to cell A.

Furthermore, as described in FIG. 5, when a first user terminal 110 is perfectly moved from a handover zone 30 to a zone of cell A, handover from cell B to cell A is performed.

Like above, when a user existed in an overlapping section made as assuming the maximum radii of two cells is connected to a specified cell, cell breathing is performed such that such user seems to be connected to cell of physically different location. However, if a staying region is a handover zone, the connection to such a zone is maintained as it is.

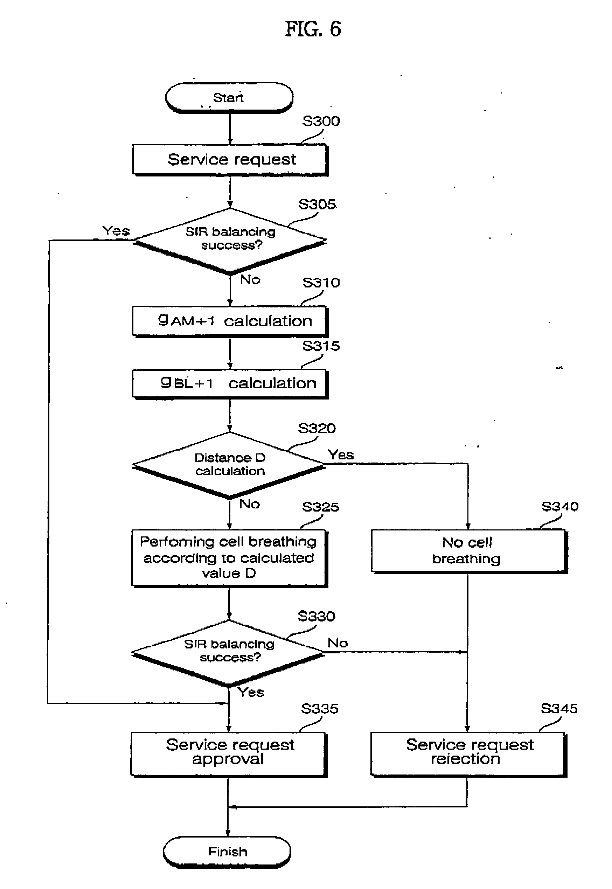

FIG. 6 is a flowchart to illustrate a method for managing radio resources in mobile communication system according to one embodiment of the present invention. Referring to FIG. 6 and the above-described process, the method for managing radio resources according to one embodiment of the present invention is the following.

First, in case of service request S300 from a user terminal within a first cell, base station controller (not drawn) perform. SIR balancing to user terminals within the first cell and thus approves the service requests of newly-entered users S305 and S335 if SIR balancing is successfully performed.

However, in case that SIR balancing cannot be performed because of no solution to SIR balancing, as described above, values $g_{AM+1}$ and $g_{AM+1}$ are calculated S310 and S315 and distance D is calculated by using equation 5 and equation 6 S320. If value D is calculated, cell breathing is performed according to D to control a size of the first cell and a second cell adjacent to a first cell S325 and thus SIR balancing is performed according to the controlled cell size. If SIR balancing succeeds S330, service request is approved S330. However, in case that cell breathing is not performed S340 because the distance D is not calculated or that SIR balancing is performed but not succeeded after controlling cell size by cell breathing, a service request of the newly-entered user terminal is rejected S345. Through these processes, in case of no success of SIR balancing, cell size is controlled and SIR balancing is again performed such that radio resources are efficiently managed.

Moreover, it is possible to embody the present invention in computer-readable code on a computer-readable recording medium. The computer-readable recording medium includes all kinds of recording equipments in which data capable of being read by computer system are read. Examples of the computer-readable recording medium are ROM, RAM, CD-ROM, magnetic tape, floppy disk and optical data storage equipment etc. and includes medium embodied as a type of carrier wave (for example, transmission through internet). Furthermore, the computer-readable recording medium is distributed on computer system connected with network and the computer-readable code is saved and executed by a distribution method.

As described above, in case of no solution as SIR balancing is applied for real-time service to guarantee more than a minimum level of QoS in mobile communication system according to the present invention, the size between adjacent cells is controlled by cell breathing such that cell load is dispersed and more user terminals are provided with such service.

Furthermore, the desirable embodiments according to the present invention being thus described, it will be obvious that the same may be varied in many ways. Such variations are not to be regarded as a departure from the scope of the invention, which is defined by the following claims.

## Claims

1. A method for managing radio resources in a mobile communication system, the method comprising;
   performing first signal-to-interference ratio SIR balancing (S305) within a first cell when a service request is made from a terminal located in the first cell (S300);
   controlling a size of both the first cell and a second cell adjacent to the first cell by performing cell breathing when the first SIR balancing does not succeed (S325);
   performing second SIR balancing according to the controlled cell size (S330); and
   approving the service request of the terminal when the second SIR balancing is performed to succeed (S335).

2. The method of claim 1, further comprising:

   approving the service request of the terminal (S335) when the first SIR balancing succeeds.

3. The method of claim 1 or 2, further comprising:

   rejecting the service request of the terminal (S345) when the second SIR balancing fails,

4. The method of claim 1, 2 or 3, wherein handover is not performed
   in a handover zone (30) where cell breathing is performed,between the first cell and the second cell.

5. The method of one of claims 1 to 4, wherein the size control of the first cell and the second cell is performed in every time slot.

6. The method of one of claims 1 to 5, wherein the service request is a request for real-time service.

7. The method of one of claims 1 to 6, wherein the size control of the first cell and the second cell is performed by drawing a reference point on a lineal distance to connect base stations of the first cell and the second cell and controlling on the basis of the reference point.

8. A mobile communication system comprising:

   a terminal located in a first cell; and
   a base station controller for managing radio resources,
   wherein the base station controller is adapted to control a size of both the first cell and a second cell adjacent to the first cell by performing cell breathing when first signal-to-interference ratio SIR balancing does not succeed upon a service request from the terminal perform second SIR balancing according to a controlled cell size of the first cell and the second cell and approve the service request of the terminal when the second SIR balancing succeeds.

9. The mobile communication system of claim 8,
wherein the controller enable is further adapted to the service request of the terminal to be rejected when the second SIR balancing fails.

10. The mobile communication system of claim 8 or 9,
wherein the controller is further adapted to enables handover not to be performed in a handover zone (30) where cell breathing is performed, between the first cell and the second cell.

11. The mobile communication system of claim 8, 9 or 10,
wherein the controller is further adapted to control the size control of the first cell and the second cell to be performed in every time slot.

12. The mobile communication system of one of claims 8 to 11,
wherein the service request is a request for real-time service.

13. The mobile communication system of one of claims 8 to 12,
wherein the controller is further adapted to perform the size control by drawing a reference point on a lineal distance to connect base stations of the first cell and the second cell and controlling on the basis of the reference point.

**Patentansprüche**

1. Verfahren zur Steuerung von Funkkapazitäten in einem Mobilkommunikationssystem, wobei das Verfahren umfasst:

Ausführen eines ersten Signal/Störungs-Verhältnis SIR-Ausgleichs (S305) in einer ersten Zelle, wenn eine Dienstanforderung von einem in der ersten Zelle befindlichen Endgerät erfolgt (S300);
Steuern einer Größe sowohl der ersten Zelle als auch einer zweiten Zelle benachbart zu der ersten Zelle durch Ausführen einer Zellenatmung, wenn der erste SIR-Ausgleich nicht erfolgreich ist (S325);
Ausführen eines zweiten SIR-Ausgleichs in Übereinstimmung mit der gesteuerten Zellengröße (S330); und
Annehmen der Dienstanforderung des Endgeräts, wenn der zweite SIR-Ausgleich erfolgreich ausgeführt wird (S335).

2. Verfahren nach Anspruch 1, das ferner umfasst:

Annehmen der Dienstanforderung des Endgeräts (S325), wenn der erste SIR-Ausgleich erfolgreich ist.

3. Verfahren nach Anspruch 1 oder 2, das ferner umfasst:

Zurückweisen der Dienstanforderung des Endgeräts (S345), wenn der zweite SIR-Ausgleich nicht erfolgreich ist.

4. Verfahren nach Anspruch 1, 2 oder 3, wobei eine Übergabe zwischen der ersten Zelle und der zweiten Zelle in einer Übergabezone (30), in der eine Zellenatmung ausgeführt wird, nicht ausgeführt wird.

5. Verfahren nach einem der Ansprüche 1 bis 4, wobei die Größensteuerung der ersten Zelle und der zweiten Zelle in jedem Zeitschlitz ausgeführt wird.

6. Verfahren nach einem der Ansprüche 1 bis 5, wobei die Dienstanforderung eine Anforderung eines Echtzeitdiensts ist.

7. Verfahren nach einem der Ansprüche 1 bis 6, wobei die Größensteuerung der ersten Zelle und der zweiten Zelle durch Ziehen eines Referenzpunkts auf einer geradlinigen Strecke, um Basisstationen der ersten Zelle und der zweiten Zelle zu verbinden, und durch Steuern auf der Grundlage des Referenzpunkts ausgeführt wird.

8. Mobilkommunikationssystem, das umfasst:

ein Endgerät, das sich in einer ersten Zelle befindet; und

eine Basisstation-Steuereinheit, um Funkkapazitäten zu steuern,
wobei die Basisstation-Steuereinheit dazu ausgelegt ist, eine Größe sowohl der ersten Zelle als auch einer zweiten Zelle benachbart zu der ersten Zelle durch Ausführen einer Zellenatmung zu steuern, wenn ein erster Signal/Störungs-Verhältnis SIR-Ausgleich, bei einer Dienstanforderung von dem Endgerät nicht erfolgreich ist, einen zweiten SIR-Ausgleich in Übereinstimmung mit einer gesteuerten Zellengröße der ersten Zelle und der zweiten Zellen auszuführen und die Dienstanforderung des Endgeräts anzunehmen, wenn der zweite SIR-Ausgleich erfolgreich ist.

**9.** Mobilkommunikationssystem nach Anspruch 8,
wobei die Steuereinheit ferner dazu ausgelegt ist, die Zurückweisung der Dienstanforderung des Endgeräts freizugeben, wenn der zweite SIR-Ausgleich nicht erfolgreich ist.

**10.** Mobilkommunikationssystem nach Anspruch 8 oder 9,
wobei die Steuereinheit ferner dazu ausgelegt ist, die Nichtausführung einer Übergabe zwischen der ersten Zelle und der zweiten Zelle in einer Übergabezone (30), in der eine Zellenatmung ausgeführt wird, freizugeben.

**11.** Mobilkommunikationssystem nach Anspruch 8, 9 oder 10,
wobei die Steuereinheit ferner dazu ausgelegt ist, die Ausführung der Größensteuerung der ersten Zelle und der zweiten Zelle in jedem Zeitschlitz zu steuern.

**12.** Mobilkommunikationssystem nach einem der Ansprüche 8 bis 11,
wobei die Dienstanforderung eine Anforderung eines Echtzeitdiensts ist.

**13.** Mobilkommunikationssystem nach einem der Ansprüche 8 bis 12,
wobei die Steuereinheit ferner dazu ausgelegt ist, die Größensteuerung durch Ziehen eines Referenzpunkts auf einer geradlinigen Strecke, um Basisstationen der ersten Zelle und der zweiten Zelle zu verbinden, und durch Steuern auf der Grundlage des Referenzpunkts auszuführen.

**Revendications**

**1.** Procédé de gestion de ressources radio dans un système de communication mobile, le procédé comportant:

effectuer une premier équilibrage de rapport signal sur interférence SIR (S305) dans une première cellule lorsqu'une demande de service est effectuée à partir d'un terminal situé dans la première cellule (S300) ;
contrôler une taille de la première cellule et d'une deuxième cellule adjacente à la première cellule en effectuant une respiration de cellule lorsque le premier équilibrage de SIR ne réussit pas (S325) ;
effectuer un deuxième équilibrage de SIR conformément à la taille de cellule contrôlée (S330) ; et
approuver la demande de service du terminal lorsque le deuxième équilibrage de SIR est effectué et réussi (S335).

**2.** Procédé selon la revendication 1, consistant à :

approuver la demande de service du terminal (S335) lorsque le premier équilibrage de SIR réussit.

**3.** Procédé selon la revendication 1 ou 2, consistant en outre à :

rejeter la demande de service du terminal (S345) lorsque le deuxième équilibrage de SIR échoue.

**4.** Procédé selon la revendication 1, 2 ou 3, dans lequel un transfert intercellulaire n'est pas effectué dans une zone de transfert intercellulaire (30) où une respiration de cellule est effectuée, entre la première cellule et la deuxième cellule.

**5.** Procédé selon l'une des revendications 1 à 4, dans lequel le contrôle de taille de la première cellule et de la deuxième cellule est effectué dans chaque tranche de temps.

**6.** Procédé selon l'une des revendications 1 à 5, dans lequel la demande de service est une demande pour un service en temps réel.

**7.** Procédé selon l'une des revendications 1 à 6, dans lequel le contrôle de taille de la première cellule et de la deuxième cellule est effectué en dessinant un point de référence sur une distance linéaire pour connecter des stations de base de la première cellule et de la deuxième cellule et en effectuant le contrôle sur la base du point de référence.

**8.** Système de communication mobile comprenant :

un terminal situé dans une première cellule ; et
un contrôleur de stations de base pour gérer des ressources radio,
dans lequel le contrôleur de stations de base est adapté pour contrôler une taille à la fois de la première cellule et d'une deuxième cellule adjacente à la première cellule en effectuant une respiration de cellule lorsqu'un premier équilibrage de rapport signal sur interférence SIR ne réussit pas lors d'une demande de service provenant du terminal, effectuer un deuxième équilibrage de SIR conformément à une taille de cellule contrôlée de la première cellule et de la deuxième cellule, et approuver la demande de service du terminal lorsque le deuxième équilibrage de SIR réussit.

**9.** Système de communication mobile selon la revendication 8,
dans lequel le contrôleur est en outre conçu pour permettre que la demande de service du terminal soit rejetée lorsque le deuxième équilibrage de SIR échoue.

**10.** Système de communication mobile selon la revendication 8 ou 9,
dans lequel le contrôleur est en outre conçu pour permettre qu'un transfert intercellulaire ne soit pas effectué dans une zone de transfert intercellulaire (30) où une respiration de cellule est effectuée, entre la première cellule et la deuxième cellule.

**11.** Système de communication mobile selon la revendication 8, 9 ou 10,
dans lequel le contrôleur est en outre conçu pour commander l'exécution du contrôle de taille de la première cellule et de la deuxième cellule dans chaque tranche de temps.

**12.** Système de communication mobile selon l'une des revendications 8 à 11,
dans lequel la demande de service est une demande pour un service en temps réel.

**13.** Système de communication mobile selon l'une des revendications 8 à 12,
dans lequel le contrôleur est en outre conçu pour effectuer le contrôle de taille en dessinant un point de référence sur une distance linéaire pour connecter des stations de base de la première cellule et de la deuxième cellule et en effectuant le contrôle sur la base du point de référence.

## FIG. 1

FIG. 2

FIG. 3

FIG. 4

(a)

Cell breathing
performance

(b)

FIG. 5

(a)

Cell breathing
performance

(b)

## FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030161268 A1

- EP 1740000 A1